# EUROPEAN PATENT APPLICATION

(11) **EP 4 681 976 A1**
(43) Date of publication of application: **21.01.2026**
(21) Application number: 25178194.4
(22) Date of filing: 22.05.2025
(51) Int. Cl.: B60L 53/14, B60L 53/36, B60L 53/37, B25J 11/00, B25J 15/00

(54) **CHARGING SYSTEM**

(30) Priority: 18.07.2024 JP 2024115049
(71) Applicant: TOYOTA JIDOSHA KABUSHIKI KAISHA, Toyota-shi, Aichi-ken 471-8571 (JP)
(72) Inventor: ONO, Hironaga, Aichi-ken, 471-8571 (JP); NISHIMURA, Ritsu, Aichi-ken, 471-8571 (JP); NISHINO, Hiroaki, Aichi-Ken, 471-8571 (JP); ONO, Yohei, Aichi-Ken, 471-8571 (JP); CHINO, Ryohei, Aichi-ken, 471-8571 (JP); ISOBE, Shimpei, Aichi-ken, 471-8571 (JP); HIROSE, Manabu, Aichi-ken, 471-8571 (JP)
(74) Representative: D Young & Co LLP

(57) **Abstract**

A charging system includes: a charger 1 including a charging connector 13; an arm mechanism 2 that is capable of gripping the charging connector 13 and moves the charging connector 13 within a predetermined range; and a control device 3 that controls the charger 1, the arm mechanism 2, and a plurality of vehicles 5, in which a portion of the charging connector 13 gripped by the arm mechanism 2 is arranged toward a side of the arm mechanism 2.

## Description

### BACKGROUND OF THE INVENTION

### 1. Field of the Invention

The present disclosure relates to a charging system.

### 2. Description of the Related Art

Patent Document 1 discloses a charging system that charges a plurality of vehicles using an arm mechanism and a charger.

### Patent Document

Patent Document 1: Japanese Patent No. 6497478

In the technology disclosed in Patent Document 1, since it is necessary to secure a wide movable range of the arm mechanism to some extent, there is room for improvement in terms of installation space.

The present disclosure has been made in view of the above, and an object thereof is to provide a charging system capable of minimizing an installation space.

A charging system according to the present disclosure includes: a charger including a charging connector; an arm mechanism that is capable of gripping the charging connector and moves the charging connector within a predetermined range; and a control device that controls the charger, the arm mechanism, and a plurality of vehicles. Further, a portion of the charging connector gripped by the arm mechanism is arranged toward a side of the arm mechanism.

According to the present disclosure, since a movable range of an arm mechanism can be reduced by arranging a charging connector in a direction of the arm mechanism, a width of a mount can be reduced, and an installation space can be minimized.

### BRIEF DESCRIPTION OF THE DRAWINGS

FIG. 1 is a block diagram illustrating a schematic configuration of a charging system according to an embodiment;
FIG. 2 is a perspective view illustrating the schematic configuration of the charging system according to the embodiment;
FIG. 3 is a plan view illustrating the schematic configuration of the charging system according to the embodiment;
FIG. 4 is a side view illustrating the schematic configuration of the charging system according to the embodiment;
FIG. 5 is a view illustrating a trajectory when an arm mechanism grips a charging connector and a direction in which the charging connector is arranged in the charging system according to the embodiment;
FIG. 6 is a view illustrating an example of a configuration of a distal end portion of the arm mechanism and the charging connector in a state where an arm-side bracket is opened in the charging system according to the embodiment;
FIG. 7 is a view illustrating an example of the configuration of the distal end portion of the arm mechanism and the charging connector in a state where the arm-side bracket is closed in the charging system according to the embodiment;
FIG. 8 is a schematic view illustrating an overall flow of a charging method executed by the charging system according to the embodiment;
FIG. 9 is a schematic view illustrating an example of a case where two vehicles are simultaneously charged using the arm mechanism in the charging system according to the embodiment;
FIG. 10 is a schematic view illustrating an example of the case where the two vehicles are simultaneously charged using the arm mechanism in the charging system according to the embodiment; and
FIG. 11 is a flowchart illustrating the overall flow of the charging method executed by the charging system according to the embodiment.

### DETAILED DESCRIPTION OF THE PREFERRED EMBODIMENTS

A charging system according to an embodiment of the present disclosure will be described with reference to the drawings. Note that components in the following embodiment include those which can be easily replaced by a person skilled in the art, or those which are substantially the same.

### (Charging System)

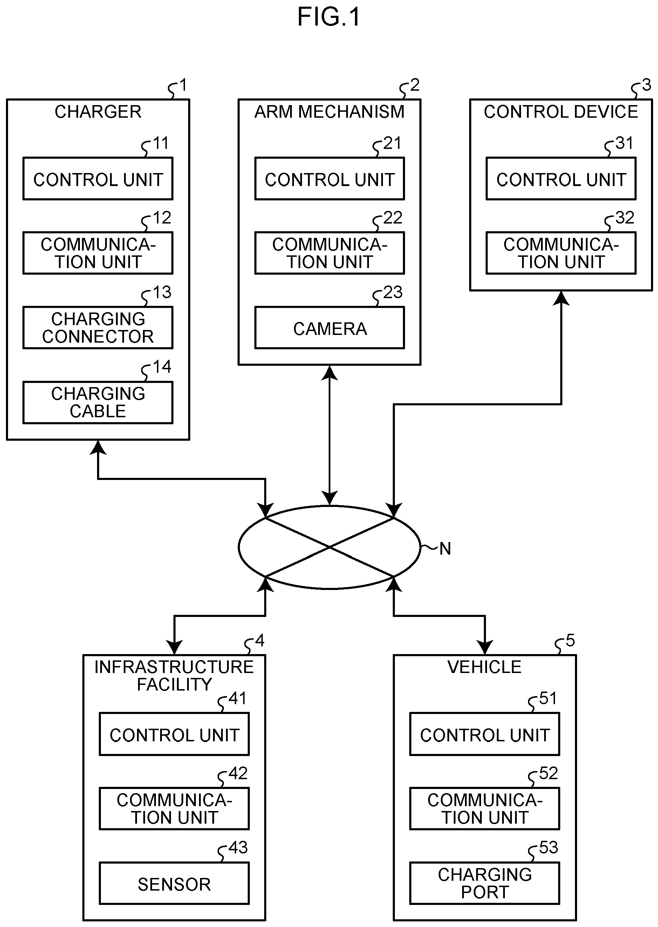

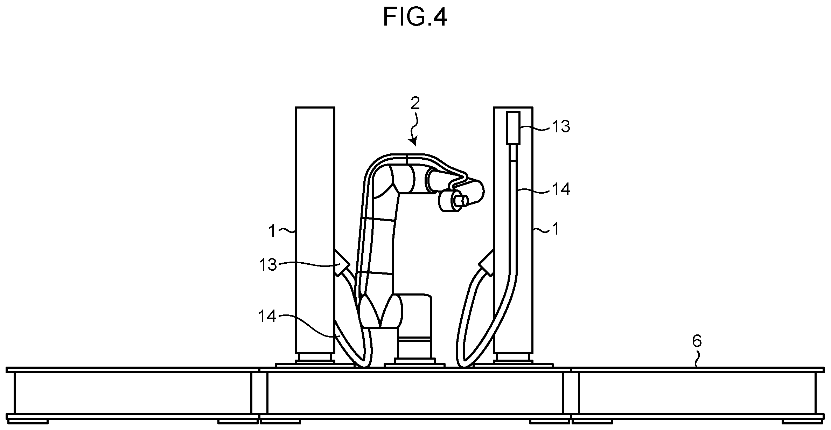

The charging system according to the embodiment will be described with reference to FIGS. 1 to 10. The charging system according to the embodiment is for simultaneously charging a plurality of vehicles using, for example, a charger installed in a parking lot or the like. As illustrated in FIG. 1, the charging system according to the embodiment includes a charger 1, an arm mechanism 2, a control device 3, an infrastructure facility 4, and a vehicle 5. The charger 1, the arm mechanism 2, the control device 3, the infrastructure facility 4, and the vehicle 5 all have a communication function, and are configured to be able to communicate with each other through a network N and exchange various types of information. The network N includes, for example, an Internet line network and a mobile phone line network.

### (Charger)

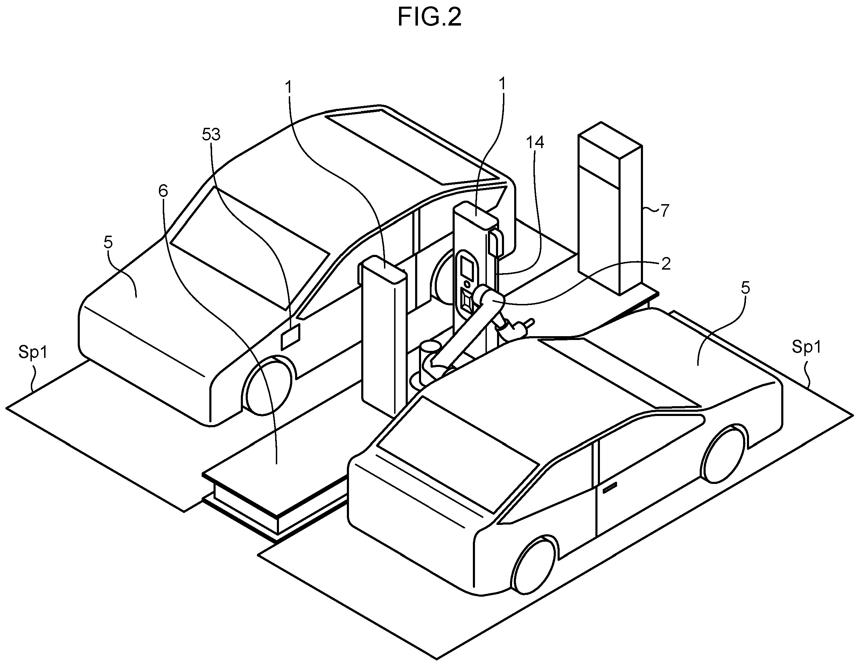

The charger (charging stand, charging post) 1 is for supplying power to the vehicle 5 to be charged. As illustrated in FIGS. 2 to 4, the charger 1 is installed on a mount 6. Furthermore, the charger 1 is coupled to a control panel 7. The control panel 7 is coupled to, for example, a substation facility (cubicle) that transforms power from a power plant.

As illustrated in FIG. 1, the charger 1 includes a control unit 11, a communication unit 12, a charging connector 13, and a charging cable 14.

The control unit 11 is implemented by, for example, a processor including a central processing unit (CPU) and a memory (main storage unit) including a random access memory (RAM) and a read only memory (ROM). The control unit 11 supplies power to the vehicle 5 to be charged on the basis of an instruction from the control device 3.

The communication unit 12 includes, for example, a local area network (LAN) interface board and a wireless communication circuit for wireless communication. The communication unit 12 exchanges information with, for example, the arm mechanism 2 and the control device 3 by communication via the network N.

The charging connector (charging gun, charging plug) 13 is for supplying power to the vehicle 5 to be charged. The charging connector 13 is locked to a side surface of the charger 1 at the time of non-charging. Then, when charging of the vehicle 5 is started, the charging connector 13 is gripped by the fixed-type arm mechanism 2 and inserted into a charging port 53 of the vehicle 5. In this state, power is supplied from a side of the charger 1 to a side of the vehicle 5 through the charging connector 13. Thereafter, when charging of the vehicle 5 is completed, the charging connector 13 is gripped again by the arm mechanism 2, removed from the charging port 53 of the vehicle 5, and then locked to the side surface of the charger 1.

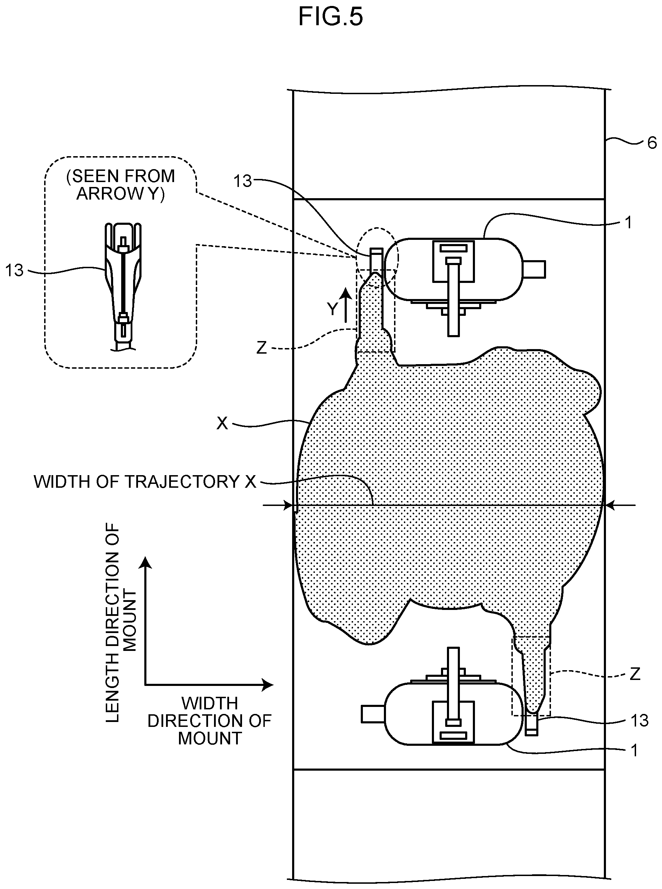

Here, FIG. 5 illustrates a trajectory X when the arm mechanism 2 grips the charging connector 13 at the time of charging the vehicle 5 and a direction in which the charging connector 13 is arranged. A width (curb width) of the mount 6 is set in accordance with the trajectory X of the operation of the arm mechanism 2 illustrated in FIG. 5. Furthermore, a portion (proximal end portion) of the charging connector 13 gripped by the arm mechanism 2 is arranged toward a side of the arm mechanism 2 (see "SEEN FROM ARROW Y" of FIG. 5).

In this manner, by arranging the proximal end portion of the charging connector 13 in a direction of the arm mechanism 2, for example, as illustrated in a Z portion of FIG. 5, when the arm mechanism 2 grips the charging connector 13, the arm mechanism 2 operates in a length direction of the mount 6. As a result, a movable range of the arm mechanism 2, specifically, a width of the trajectory X can be reduced as compared with a case where the proximal end portion of the charging connector 13 is not arranged in the direction of the arm mechanism 2. As a result, the width (curb width) of the mount 6 on which the arm mechanism 2 is installed can be reduced, and an installation space of the arm mechanism 2 can be minimized. Furthermore, by minimizing the width of the mount 6 on which the charger 1 and the arm mechanism 2 are mounted, a length of the width of the mount 6 may be set to be equal to that of a width of the charger 1.

Note that FIGS. 2 to 5 illustrate an example in which one charging connector 13 is provided for one charger 1, but a plurality of the charging connectors 13 may be provided for one charger 1.

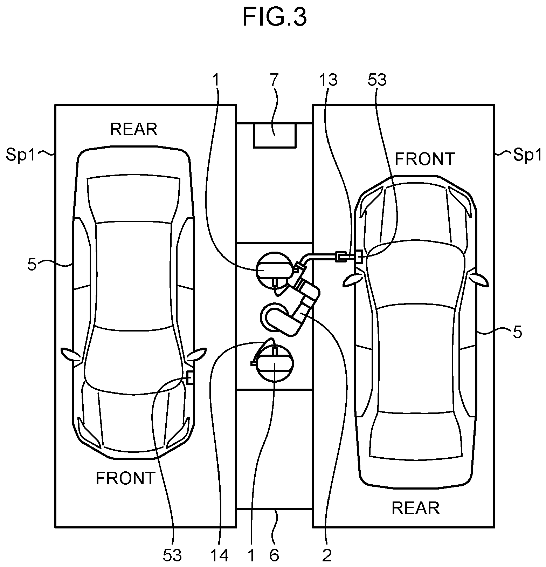

The charging cable 14 is provided between the charging connector 13 and the charger 1 (charger main body). The charging cable 14 has a length that allows the charging connector 13 to be inserted into the charging port 53 regardless of a position of the charging port 53 in the vehicle 5. For example, although FIG. 3 illustrates an example in which the charging port 53 is arranged on a left front side of the vehicle 5, the charging port 53 may be arranged on a left rear side, a center front side, a center rear side, or the like of the vehicle 5, depending on a vehicle type. Therefore, the charging cable 14 has the length that allows the charging connector 13 to be inserted regardless of whether the charging port 53 is arranged on the left front side, the left rear side, the center front side, or the center rear side of the vehicle 5.

Note that the charging port 53 may be arranged on a right front side or a right rear side of the vehicle 5, depending on the vehicle type of the vehicle 5. In this case, for example, in FIG. 3, the vehicles 5 are parked in left and right charging spaces Sp1, facing in opposite directions in the front and rear, and are charged with the respective charging ports 53 faced in a direction of the charger 1. For example, the vehicle 5 on a right side of FIG. 3 is parked in the charging space Sp1 such that the front of the vehicle faces downward in the drawing and the rear of the vehicle faces upward in the drawing. Furthermore, the vehicle 5 on the left side is parked such that the front of the vehicle faces upward in the drawing and the rear of the vehicle faces downward in the drawing.

### (Arm Mechanism 2)

The arm mechanism (automatic charging robot) 2 is for gripping the charging connector 13 when charging the vehicle 5 from the charger 1. The arm mechanism 2 can grip a plurality of the charging connectors 13 and moves each of the charging connectors 13 within a predetermined range. The arm mechanism 2 is installed on and fixed to the mount 6.

As illustrated in FIG. 1, the arm mechanism 2 includes a control unit 21, a communication unit 22, and a camera 23.

The control unit 21 is implemented by, for example, a processor including a CPU and a memory (main storage unit) including a RAM and a ROM. On the basis of an instruction from the control device 3, the control unit 21 grips the charging connector 13,and inserts the charging connector 13 into the charging port 53 and removes the charging connector 13 from the charging port 53.

Furthermore, when inserting the gripped charging connector 13 into the charging port 53, the control unit 21 specifies the position of the charging port 53 and a distance to the charging port 53 (distance between the charging connector 13 and the charging port 53) from an image captured by the camera 23 installed at a distal end of the arm mechanism 2, for example. A shape of the charging port 53 of the vehicle 5 is standardized. Therefore, the position of the charging port 53 can be specified by performing pattern matching on the basis of the image of the charging port 53 captured by the camera 23. Furthermore, the distance from the charging connector 13 gripped by the arm mechanism 2 to the charging port 53 can be specified by acquiring information in a depth direction using a three-dimensional (3D) camera as the camera 23.

The communication unit 22 includes, for example, a LAN interface board and a wireless communication circuit for wireless communication. The communication unit 22 exchanges information with, for example, the charger 1 and the control device 3 by communication via the network N.

The camera 23 is for capturing an image of the charging port 53. The camera 23 is provided at the distal end of the arm mechanism 2 (arm mechanism main body). Furthermore, as the camera 23, it is preferable to use a 3D camera capable of acquiring information in the depth direction.

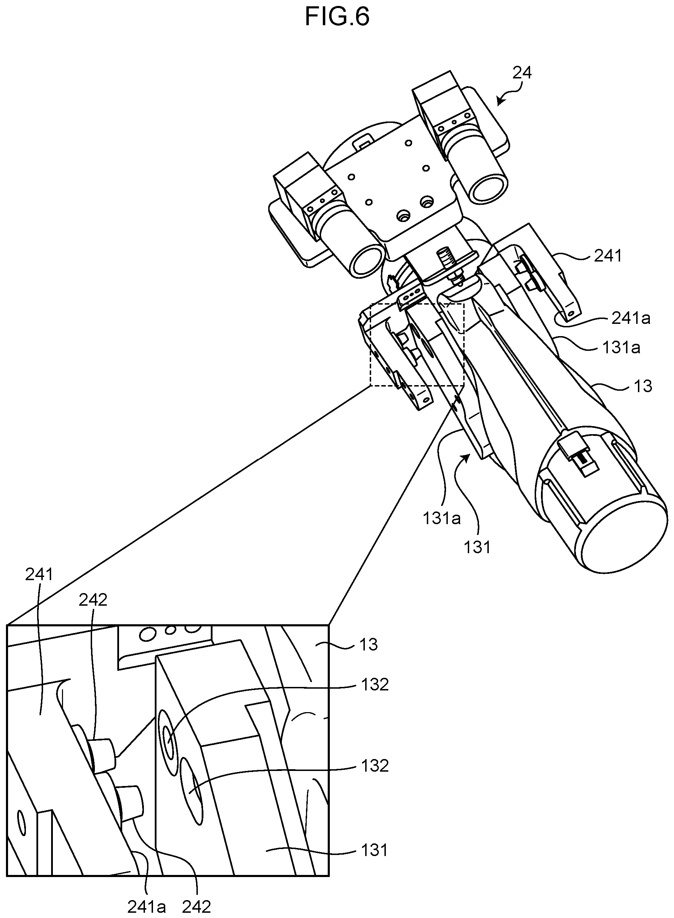

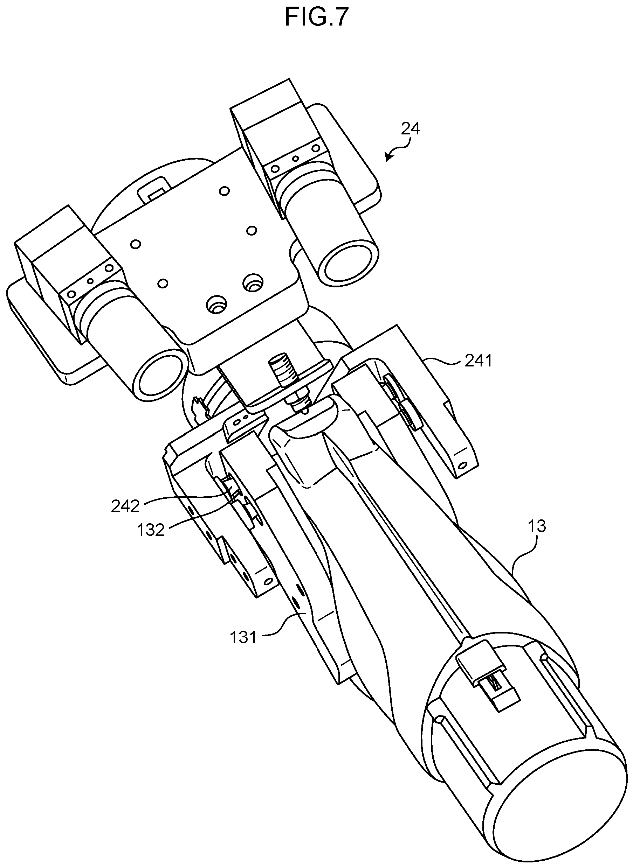

FIGS. 6 and 7 illustrate an example of a configuration of a distal end portion 24 of the arm mechanism 2 and the charging connector 13 of the charger 1. Furthermore, FIG. 6 illustrates a state where an arm-side bracket 241 to be described later is open and the arm mechanism 2 does not grip the charging connector 13. Furthermore, FIG. 7 illustrates a state where the arm-side bracket 241 to be described later is closed and the arm mechanism 2 grips the charging connector 13.

The openable and closable arm-side bracket 241 is attached to the distal end portion 24 of the arm mechanism 2. The arm-side bracket 241 is for gripping a connector-side bracket 131 to be described later.

The arm-side bracket 241 is configured to be opened and closed with respect to the connector-side bracket 131 to be described later by, for example, a servomotor (not illustrated) provided in the distal end portion 24. Furthermore, as illustrated in an enlarged view of FIG. 6, a plurality of tapered pins 242 is provided on an inner side of the arm-side bracket 241. The tapered pins 242 are provided on opposing inner surfaces 241a of the arm-side bracket 241 formed in a U shape. Furthermore, the number of tapered pins 242 corresponds to the number of tapered holes 132 provided in the connector-side bracket 131 to be described later.

The connector-side bracket 131 is attached to the proximal end of the charging connector 13. The connector-side bracket 131 is fixed to the proximal end of the charging connector 13. Furthermore, the plurality of tapered holes 132 is provided on an outer side of the connector-side bracket 131. The tapered holes 132 are provided in outer surfaces 131a on both sides of the connector-side bracket 131.

As illustrated in FIGS. 6 and 7, the arm mechanism 2 grips the connector-side bracket 131 by the arm-side bracket 241, and grips the charging connector 13 by inserting the plurality of tapered pins 242 into the plurality of tapered holes 132.

In this manner, in the charging system according to the embodiment, the charging connector 13 can be reliably gripped by the small servomotor provided in the arm mechanism 2 by adopting a method of gripping the charging connector 13 not by frictional force but by inserting the tapered pins 242 into the tapered holes 132. As a result, since a size and a weight of the arm mechanism 2 can be reduced, the installation space of the arm mechanism 2 can be minimized.

### (Control Device 3)

The control device 3 is for controlling the charger 1, the arm mechanism 2, and the plurality of vehicles 5. The control device 3 performs, for example, charge control of the charger 1, operation control of the arm mechanism 2, control of the infrastructure facility 4, and travel control (movement control) of the vehicle 5. The control device 3 is implemented by, for example, a general-purpose computer such as a workstation or a personal computer, or a server arranged on a cloud. Note that the control device 3 may be configured by different types of hardware depending on an object to be controlled (the charger 1, the arm mechanism 2, the infrastructure facility 4, or the vehicle 5). Furthermore, in the control device 3, the control panel 7 may have a function of performing the charge control of the charger 1.

As illustrated in FIG. 1, the control device 3 includes a control unit 31 and a communication unit 32.

The control unit 31 is implemented by, for example, a processor including a CPU and a memory (main storage unit) including a RAM and a ROM. Hereinafter, specific processing contents of the control unit 31 will be described.

The control unit 31 performs the travel control of the vehicle 5 on the basis of information (for example, position information of the vehicle 5) acquired from the infrastructure facility 4. Furthermore, the control unit 31 moves the vehicle 5 within a predetermined range (within an operation range of the arm mechanism 2) by remotely controlling the vehicle 5. Furthermore, the control unit 31 causes the vehicle 5 to be parked such that the charging port 53 of the vehicle 5 faces the side of the charger 1 within the predetermined range.

For example, the control unit 31 receives a charging reservation of the vehicle 5 from a user (for example, a driver) of the vehicle 5. The charging reservation may be received on the basis of information input to an information terminal (for example, a smartphone connected to the network N) possessed by the user, or may be received on the basis of information input to an in-vehicle terminal (for example, a car navigation system connected to the network N) by the user.

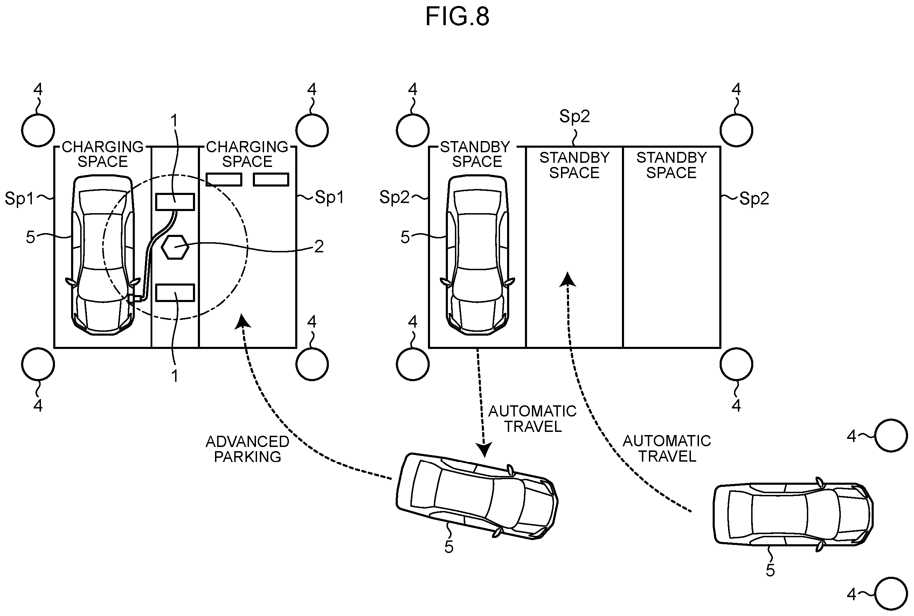

When charging order of the vehicle 5 is approaching, as illustrated in FIG. 8, the control unit 31 causes the vehicle 5 to automatically travel from a parking space where the vehicle 5 is parked to a standby space Sp2 using the position information and the like of the vehicle 5 acquired from the infrastructure facility 4, and then causes the vehicle 5 to be automatically parked. In this manner, by moving the vehicle 5 to be charged to the standby space Sp2 in advance and causing the vehicle 5 to stand by, a switching time of the vehicle 5 to be charged can be minimized, and an operation rate of the charger 1 can be improved.

Subsequently, when the charging order of the vehicle 5 arrives, the control unit 31 causes the vehicle 5 to automatically travel from the standby space Sp2 to the charging spaces Sp1 using the position information and the like of the vehicle 5 acquired from the infrastructure facility 4, and then causes the vehicle 5 to be automatically parked. Then, the control unit 31 causes the arm mechanism 2 to grip the charging connector 13 and insert the charging connector 13 into the charging port 53, and causes the charger 1 to start charging.

Subsequently, when charging of the vehicle 5 is completed, the control unit 31 causes the arm mechanism 2 to grip the charging connector 13 again and remove the charging connector 13 from the charging port 53. Subsequently, the control unit 31 causes the vehicle 5 to automatically travel from the charging spaces Sp1 to the standby space Sp2 using the position information of the vehicle 5 acquired from the infrastructure facility 4, and then causes the vehicle 5 to be automatically parked.

When causing the vehicle 5 to be parked in the charging space Sp1, the control unit 31 causes the vehicle 5 to be parked so that the charging port 53 faces the side of the charger 1. For example, in a case where the vehicle 5 in which the charging port 53 is arranged on the left front side is charged, as illustrated in FIG. 3, the vehicle 5 is caused to be parked in the charging space Sp1 on the right side of the charger 1 with the front of the vehicle facing upper side of the drawing and the rear of the vehicle facing lower side of the drawing such that the charging port 53 is on the left side. Furthermore, in contrast, the vehicle 5 is caused to be parked in the charging space Sp1 on the left side of the charger 1 with the front of the vehicle facing lower side of the drawing and the rear of the vehicle facing upper side of the drawing such that the charging port 53 is on the right side.

Note that, in contrast to FIG. 3, the charging port 53 may be arranged on the right front side or the right rear side of the vehicle 5, depending on the vehicle type of the vehicle 5. In this case, for example, in the example of the two vehicles 5 illustrated in FIG. 3, the vehicle 5 is caused to be parked in the charging space Sp1 on the right side of the charger 1 with the front of the vehicle facing lower side of the drawing and the rear of the vehicle facing upper side of the drawing such that the charging port 53 is on the left side. Furthermore, in contrast, the vehicle 5 is caused to be parked in the charging space Sp1 on the left side of the charger 1 with the front of the vehicle facing upper side of the drawing and the rear of the vehicle facing lower side of the drawing such that the charging port 53 is on the right side.

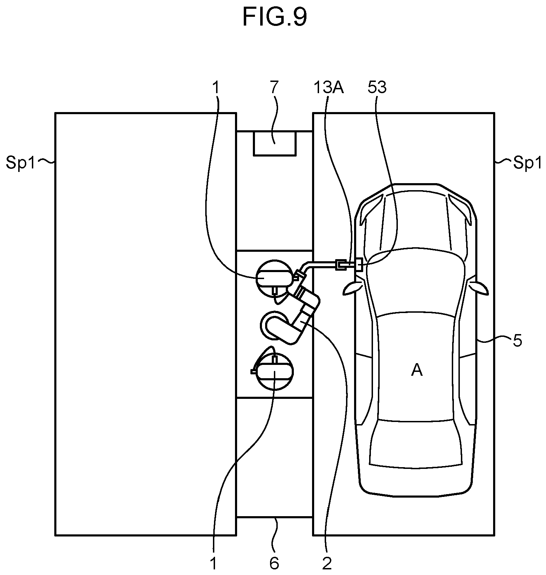

The control unit 31 simultaneously charges two or more vehicles 5 by operating the charging connector 13 with one arm mechanism 2. In this case, as illustrated in FIG. 9, the control unit 31 moves the first vehicle 5 (hereinafter, referred to as a "vehicle A") to a predetermined position (the charging space Sp1 on a right side of the drawing). Subsequently, the control unit 31 causes the arm mechanism 2 to grip a charging connector 13A of the first charger 1 (the charger 1 on an upper side of the drawing). Subsequently, the control unit 31 inserts the charging connector 13A gripped by the arm mechanism 2 into the charging port 53 of the vehicle A to start charging of the vehicle A.

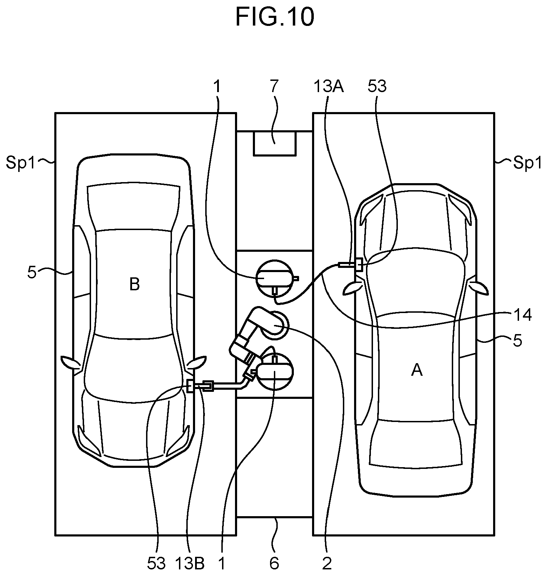

Subsequently, as illustrated in FIG. 10, the control unit 31 moves the second vehicle 5 (hereinafter, referred to as a "vehicle B") to a predetermined position (the charging space Sp1 on a left side of the drawing). Subsequently, the control unit 31 causes the arm mechanism 2 to grip a charging connector 13B of the second charger 1 (the charger 1 on a lower side of the drawing). Subsequently, during charging of the vehicle A, the control unit 31 inserts the charging connector 13B gripped by the arm mechanism 2 into the charging port 53 of the vehicle B to start charging of the vehicle B.

In this manner, in the charging system according to the embodiment, the two or more charging connectors 13A and 13B can be operated by the one arm mechanism 2 to simultaneously charge the two or more vehicles 5. As a result, a turnover rate of charging can be increased.

Note that, in the examples of FIGS. 9 and 10, before the vehicle A stops at the predetermined position (the charging space Sp1 on the right side of the drawing), the control unit 31 may cause the arm mechanism 2 to grip the charging connector 13A of the first charger 1 (the charger 1 on the upper side of the drawing) in advance and stand by. Furthermore, similarly, before the vehicle B stops at the predetermined position (the charging space Sp1 on the left side of the drawing), the control unit 31 may cause the arm mechanism 2 to grip the charging connector 13B of the second charger 1 (the charger 1 on the lower side of the drawing) in advance and stand by.

Furthermore, in the examples of FIGS. 9 and 10, the "predetermined position" refers to the charging space Sp1. Furthermore, in the examples of FIGS. 9 and 10, in the case of charging only one of the vehicles 5, the control unit 31 may return the arm mechanism 2 to a predetermined standby position and cause the arm mechanism 2 to stand by after inserting the charging connector 13A (or the charging connector 13B) into the charging port 53. Alternatively, the control unit 31 may return the arm mechanism 2 to the predetermined standby position and cause the arm mechanism 2 to stand by after removing the charging connector 13A (or the charging connector 13B) from the charging port 53. Furthermore, for example, in a case where there is no vehicle 5 standing by for charging next, or in a case where there is no vehicle 5 for which charging has already been completed, the control unit 31 may return the arm mechanism 2 to the predetermined standby position and cause the arm mechanism 2 to stand by.

Furthermore, the control unit 31 may move the second vehicle 5 (the vehicle B) to a range in which the charging connector 13B of the second charger 1 can be inserted by the arm mechanism 2 during charging of the first vehicle 5 (the vehicle A). As a result, the second vehicle 5 can be charged quickly.

Furthermore, in a case where charging of the first vehicle 5 (the vehicle A) is completed, the control unit 31 moves the arm mechanism 2 to the position of the charging port 53 of the first vehicle 5, releases a lock of the charging connector 13A, and then removes the charging connector 13A from the charging port 53 of the first vehicle 5 by the arm mechanism 2. Furthermore, in a case where charging of the second vehicle 5 (the vehicle B) is completed, the control unit 31 moves the arm mechanism 2 to the position of the charging port 53 of the second vehicle 5, releases a lock of the charging connector 13B, and then removes the charging connector 13B from the charging port 53 of the second vehicle 5 by the arm mechanism 2.

In this manner, in the charging system according to the embodiment, the arm mechanism 2 is caused to grip the charging connectors 13A and 13B in advance and stand by before the vehicle 5 arrives at the charging space Sp1, whereby the turnover rate of charging can be further increased.

Furthermore, in the examples of FIGS. 9 and 10, the control unit 31 may determine whether or not to immediately remove the charging connector 13A from the currently charged vehicle A depending on whether or not the following vehicle B is nearby (whether or not the vehicle B can be immediately charged).

In this case, in a case where charging of the vehicle A is completed and the vehicle B is stopped at the predetermined position (the charging space Sp1 on the left side of the drawing), the control unit 31 causes the arm mechanism 2 to insert the charging connector 13B of the second charger 1 (the charger 1 on the lower side of the drawing) into the charging port 53 of the vehicle B to start charging. Then, thereafter, the control unit 31 removes the charging connector 13A of the first charger 1 (the charger 1 on the upper side of the drawing) from the charging port 53 of the vehicle A. In other words, in a case where the vehicle B is stopped in the charging space Sp1 and the vehicle B can be charged immediately at a point of time when charging of the vehicle A is completed, the control unit 31 preferentially performs the insertion of the charging connector 13B into the vehicle B rather than the removal of the charging connector 13A from the vehicle A.

On the other hand, in a case where charging of the vehicle A is completed and the vehicle B is not stopped at the predetermined position (the charging space Sp1 on the left side of the drawing), the control unit 31 causes the arm mechanism 2 to remove the charging connector 13A of the first charger 1 (the charger 1 on the upper side of the drawing) from the charging port 53 of the vehicle A. Then, after the vehicle B stops at the predetermined position, the control unit 31 inserts the charging connector 13B of the second charger 1 (the charger 1 on the lower side of the drawing) into the charging port 53 of the vehicle B to start charging. In other words, in a case where the vehicle B is not stopped in the charging space Sp1 and the vehicle B cannot be charged immediately at the point of time when charging of the vehicle A is completed, the control unit 31 preferentially performs the removal of the charging connector 13A from the vehicle A rather than the insertion of the charging connector 13B into the vehicle B.

In this manner, in the charging system according to the embodiment, when the plurality of charging connectors 13A and 13B is operated by the one arm mechanism 2, it is determined whether to first remove the charging connector 13A or 13B from the vehicle 5 or to insert another charging connector 13A or 13B into another vehicle 5 depending on a degree of congestion of charging. For example, in a case where charging is congested, when the insertion of the charging connector 13A or 13B is prepared first, even when a completion time of the removal is delayed, the insertion into the another vehicle 5 is prioritized. On the other hand, in a case where charging is not congested, the removal of the charging connector 13A or 13B is prioritized, and then the insertion into the another vehicle 5 is started.

In this manner, in the charging system according to the embodiment, by efficiently performing the operation of inserting the charging connectors 13A and 13B into the plurality of vehicles 5 and the operation of removing the charging connectors 13A and 13B from the plurality of vehicles 5, the turnover rate of charging can be further increased.

The communication unit 32 includes, for example, a local area network (LAN) interface board and a wireless communication circuit for wireless communication. The communication unit 32 exchanges information with, for example, the charger 1, the arm mechanism 2, the infrastructure facility 4, and the vehicle 5 by communication via the network N.

### (Infrastructure Facility 4)

The infrastructure facility 4 is for implementing, for example, automatic traveling of the vehicle 5 in a parking lot and automatic parking by advanced parking (advanced parking support function). For example, as illustrated in FIG. 8, the infrastructure facilities 4 are arranged around the charging space Sp1 of the vehicle 5, around the standby space Sp2 of the vehicle 5, and on a travel route of the vehicle 5 (both sides and the like of the travel route).

As illustrated in FIG. 1, the infrastructure facility 4 includes a control unit 41, a communication unit 42, and a sensor 43.

The control unit 41 is implemented by, for example, a processor including a CPU and a memory (main storage unit) including a RAM and a ROM. The control unit 41 transmits, for example, information regarding a position of the vehicle 5 detected by the sensor 43 to the control device 3.

The communication unit 42 includes, for example, a local area network (LAN) interface board and a wireless communication circuit for wireless communication. The communication unit 42 exchanges information with, for example, the control device 3 and the vehicle 5 by communication via the network N.

The sensor 43 includes, for example, light detection and ranging or laser imaging detection and ranging (LiDAR) and a camera.

### (Vehicle 5)

The vehicle 5 is, for example, an electric vehicle capable of supplying power, such as a plug-in hybrid electric vehicle (PHEV) or a battery electric vehicle (BEV). The vehicle 5 may be, for example, an autonomous driving vehicle capable of autonomously traveling without an operation by a driver. Furthermore, the vehicle 5 may have an automatic parking function for performing automatic parking or a parking assist function for assisting parking.

As illustrated in FIG. 1, the vehicle 5 includes a control unit 51, a communication unit 52, and the charging port 53. Note that, in FIG. 1, among the configurations of the vehicle 5, only the configurations essential for implementing a charging system according to the embodiment are illustrated, and the other configurations are not illustrated.

The control unit 51 is, for example, an electronic control unit (ECU) whose main component is a microcomputer including a CPU, a RAM, and a ROM. The control unit 51 executes various programs to integrally control operations of various components of the vehicle 5.

The control unit 51 performs, for example, automatic traveling and automatic parking in a parking lot on the basis of an instruction from the control device 3. For example, in a case where a user of the vehicle 5 makes a charging reservation using the charger 1, the user drives the vehicle 5 to a parking lot where the charger 1 is installed and parks the vehicle 5 in a parking space in the parking lot. Then, the user gets off the vehicle 5, opens a cover of a charging port 53 (hereinafter, referred to as a "charging port cover"), and leaves the parking space.

When charging order of the vehicle 5 is approaching, the control unit 51 causes the vehicle 5 to automatically travel from the parking space to the standby space Sp2 according to an instruction from the control device 3, and then causes the vehicle 5 to be automatically parked. Subsequently, when the charging order of the vehicle 5 arrives, the control unit 51 causes the vehicle 5 to automatically travel from the standby space Sp2 to the charging spaces Sp1 according to an instruction from the control device 3, and then causes the vehicle 5 to be automatically parked. Then, the charging connector 13 gripped by the arm mechanism 2 is inserted into the charging port 53, and charging is started.

Subsequently, when charging is completed, the charging connector 13 is removed from the charging port 53 by the arm mechanism 2. Subsequently, the control unit 51 causes the vehicle 5 to automatically travel from the charging spaces Sp1 to the standby space Sp2 according to an instruction from the control device 3, and then causes the vehicle 5 to be automatically parked.

The communication unit 52 includes, for example, a data communication module (DCM). The communication unit 52 exchanges information with, for example, the charger 1, the arm mechanism 2, the control device 3, and the infrastructure facility 4 by communication via the network N.

The charging port (inlet) 53 is for receiving power supply from the charger 1. By insertion of the charging connector 13 of the charger 1 into the charging port 53, the power from the charger 1 is stored in a battery of the vehicle 5 (not illustrated). In the examples of FIGS. 2 to 4, the charging port 53 is arranged on the left front side of the vehicle 5, but may be arranged on the left rear side, the right front side, the right rear side, the center front side, the center rear side, or the like of the vehicle 5.

The mount 6 is installed in, for example, a parking lot or the like where the vehicles 5 can be accumulated. The mount 6 can be installed in any parking lot such as a flat parking lot, a mechanical multi-story parking lot, or a self-traveling multistory parking lot regardless of a type of the parking lot, for example. Furthermore, as illustrated in FIGS. 2 to 4, the charger 1, the arm mechanism 2, and the control panel 7 are arranged on the mount 6. Furthermore, in the present embodiment, the two chargers 1 are installed on the mount 6, and the two or more vehicles 5 can be simultaneously charged.

In a case where the charger 1 is installed in a parking lot, the installation is performed in units of mounts. In other words, the charger 1, the arm mechanism 2, and the control panel 7 are installed on the mount 6 in advance in a factory or the like, and after adjustment (robot teaching) of the operation of the arm mechanism 2, positioning of the charger 1 and the arm mechanism 2, wiring work, and the like are completed, the mount 6 is carried into the parking lot and installed (for example, fixed by an anchor). By performing the installation in units of mounts in this manner, a degree of freedom in the installation of the charger 1 and the arm mechanism 2 is improved, and construction cost can be minimized.

### (Charging Method)

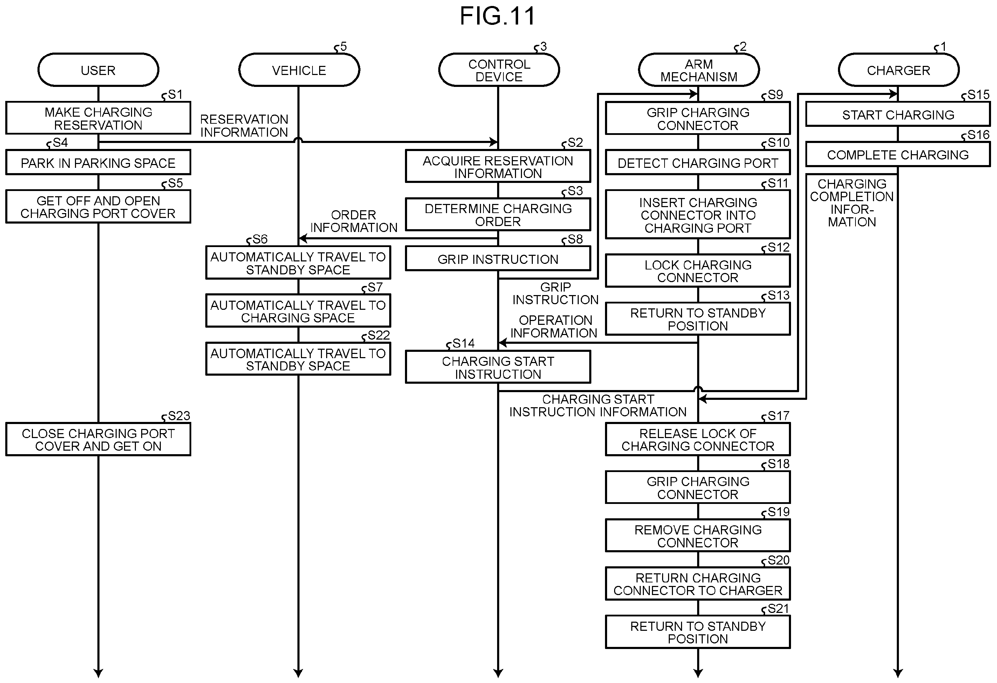

A flow of a charging method executed by the charging system according to the embodiment will be described with reference to FIG. 11.

First, a user makes a charging reservation (Step S1). The charging reservation may be made through an information terminal (for example, a smartphone connected to the network N) possessed by the user, or may be made through an in-vehicle terminal (for example, a car navigation system connected to the network N).

Subsequently, the control device 3 acquires charging reservation information from the information terminal, the in-vehicle terminal, or the like described above (Step S2). The reservation information includes information necessary for charging the vehicle 5 by the charger 1.

The reservation information includes, for example, information for specifying the user (for example, a user ID or the like), information regarding transmission date and time of the charging reservation, and information regarding date and time when charging is desired. Furthermore, the reservation information also includes information for specifying the vehicle 5 (for example, a vehicle number or the like), a shape of the vehicle 5 (body type), information regarding the position of the charging port 53 of the vehicle 5, information regarding a remaining battery amount (state of charge (SOC)) of the vehicle 5, and a current position of the vehicle 5. Note that the "information regarding the position of the charging port 53" is, for example, information regarding where the charging port 53 is arranged among the left front side, the left rear side, the right front side, the right rear side, the center front side, and the center rear side of the vehicle 5.

Subsequently, the control device 3 determines charging order of the vehicle 5 whose reservation has been received (Step S3). In Step S3, the charging order of the vehicle 5 is determined on the basis of, for example, the number of other vehicles 5 whose charging reservation has been received at the same time or before or after the same time, and a time until completion of charging predicted from the remaining battery amounts of the other vehicles 5. Furthermore, in Step S3, the control device 3 transmits information regarding the determined order (order information) to the vehicle 5 (and the information terminal of the user or the in-vehicle terminal).

Subsequently, the user parks the vehicle 5 in a parking space of a parking lot (parking lot where the charger 1 is installed) (Step S4). Subsequently, after getting off the vehicle 5, the user opens the charging port cover (Step S5) and leaves the parking space.

Subsequently, the vehicle 5 automatically travels from the parking space to the standby space Sp2 on the basis of an instruction of the control device 3 (Step S6). Then, when the charging order arrives, the vehicle 5 automatically travels from the standby space Sp2 to the charging space Sp1 on the basis of an instruction of the control device 3 (Step S7).

When the vehicle 5 stops in the charging space Sp1, the control device 3 transmits an instruction (grip instruction) to grip the charging connector 13 to the arm mechanism 2 (Step S8). In response to this, the arm mechanism 2 grips the charging connector 13 (Step S9) and moves the charging connector 13 to the vicinity of the charging port 53. Subsequently, the arm mechanism 2 detects the position of the charging port 53 by, for example, pattern matching or the like based on an image of the charging port 53 (Step S10), and inserts the charging connector 13 into the charging port 53 (Step S11).

Subsequently, the arm mechanism 2 locks the charging connector 13 by a lock mechanism or the like (not illustrated) so that the charging connector 13 is not detached from the charging port 53 (Step S12), releases the grip of the charging connector 13, and returns to a predetermined standby position (Step S13). Examples of the "predetermined standby position" include a position where the entire arm mechanism 2 is within a range of the mount 6 (a position not protruding from the mount 6) as illustrated in FIG. 2. Furthermore, in Step S13, the arm mechanism 2 transmits information regarding a current operation state of the arm mechanism 2 (for example, a current position, whether or not the charging connector 13 is locked, and the like) to the control device 3.

Here, the arm mechanism 2 returns to the predetermined standby position as in S13 in a case where, for example, there is no another vehicle 5 standing by for charging next, or there is no another vehicle 5 for which charging has already been completed. For example, in a case where there is another vehicle 5 standing by for charging next, the arm mechanism 2 does not return to the predetermined standby position (without performing Step S13), and directly performs the processing of Step S9 and subsequent steps on the another vehicle 5. Furthermore, for example, in a case where there is another vehicle 5 next for which charging has already been completed, the arm mechanism 2 does not return to the predetermined standby position (without performing Step S13), and directly performs processing of Step S17 and subsequent steps on the another vehicle 5.

Subsequently, the control device 3 transmits information (charging start instruction information) instructing the charger 1 to start charging the vehicle 5 to the charger 1 (Step S14). Subsequently, the charger 1 starts charging the vehicle 5 (Step S15). Subsequently, when charging of the vehicle 5 is completed (Step S16), the charger 1 transmits information (charging completion information) indicating that charging is completed to the arm mechanism 2.

Subsequently, the arm mechanism 2 releases the lock of the charging connector 13 (Step S17), grips the charging connector 13 (Step S18), and removes the charging connector 13 from the charging port 53 (Step S19). Subsequently, the arm mechanism 2 returns the removed charging connector 13 to a predetermined position of the charger 1 (for example, the side surface of the charger 1) (Step S20), releases the grip of the charging connector 13, and returns to the predetermined standby position (Step S21).

Here, the arm mechanism 2 returns to the predetermined standby position as in S21 in a case where, for example, there is no other vehicle 5 standing by for charging next, or there is no other vehicle 5 for which charging has already been completed. For example, in a case where there is another vehicle 5 standing by for charging next, the arm mechanism 2 does not return to the predetermined standby position (without performing Step S21), and directly performs the processing of Step S9 and subsequent steps on the another vehicle 5. Furthermore, for example, in a case where there is another vehicle 5 next for which charging has already been completed, the arm mechanism 2 does not return to the predetermined standby position (without performing Step S21), and directly performs the processing of Step S17 and subsequent steps on the another vehicle 5.

Subsequently, the vehicle 5 automatically travels from the charging spaces Sp1 to the standby space Sp2 on the basis of an instruction of the control device 3 (Step S22). Subsequently, the user closes the charging port 53 in the standby space Sp2, gets on the vehicle 5 (Step S23), and exits from the parking lot.

Note that, although not illustrated in FIG. 11, in a scene where the vehicle 5 automatically travels in Steps S6, S7, and S22, the control device 3 and the vehicle 5 communicate with each other at all times, so that the automatic traveling is implemented. In this case, for example, the control device 3 sequentially transmits positions of the standby space Sp2 and the charging space Sp1, travel routes to the standby space Sp2 and the charging space Sp1, and the like to the vehicle 5 while specifying the position of the vehicle 5 on the basis of information acquired from the infrastructure facility 4. As a result, the control device 3 controls traveling of the vehicle 5 in the parking lot.

According to the charging system according to the embodiment described above, by arranging the charging connector 13 of the charger 1 in the direction of the arm mechanism 2, the movable range of the arm mechanism 2 (the width of the trajectory X of FIG. 5) can be reduced. As a result, since the width (curb width) of the mount 6 on which the arm mechanism 2 is installed can be reduced, the installation space of the arm mechanism 2 can be minimized.

Furthermore, as illustrated in FIGS. 6 and 7, the charging system according to the embodiment adopts the method in which the charging connector 13 is gripped not by the frictional force but by the insertion of the tapered pins 242 into the tapered holes 132. As a result, the charging connector 13 can be reliably gripped by the small servomotor provided in the arm mechanism 2. As a result, since the size and the weight of the arm mechanism 2 can be reduced, the installation space of the arm mechanism 2 can be minimized.

Furthermore, in the charging system according to the embodiment, the plurality of charging connectors 13 is operated by the one fixed-type arm mechanism 2 to simultaneously charge the plurality of vehicles 5. At that time, since the arm mechanism 2 itself cannot move, the vehicle 5 is moved while the charging connector 13 is inserted and charging is performed to simultaneously charge the plurality of vehicles 5.

In this manner, according to the charging system according to the embodiment, regardless of the position of the charging port 53 of the vehicle 5 and the type of the parking lot, two or more vehicles 5 can be simultaneously charged with a simple configuration, and the turnover rate of charging can be increased. As a result, a standby time for charging of a user can be shortened, and profitability when charging of the vehicle 5 is developed as a business can be improved. In the charging system according to the embodiment, since charging is performed using automatic traveling and automatic parking of the vehicle 5, it is not necessary for the user to stand by for charging, and convenience for the user is improved.

Note that further effects and modifications may readily occur to those skilled in the art. Thus, the present application in its broader aspects is not limited to the specific details and representative embodiments illustrated and described above. Thus, various modifications may be made without departing from the general inventive concept or scope as defined by the appended claims and equivalents thereof.

### Explanation of signs

1: CHARGER
11: CONTROL UNIT
12: COMMUNICATION UNIT
13, 13A, 13B: CHARGING CONNECTOR
131: CONNECTOR-SIDE BRACKET
131A: OUTER SURFACE
132: TAPERED HOLE
14: CHARGING CABLE
2: ARM MECHANISM
21: CONTROL UNIT
22: COMMUNICATION UNIT
23: CAMERA
24: DISTAL END PORTION
241: ARM-SIDE BRACKET
241A: INNER SURFACE
242: TAPERED PIN
3: CONTROL DEVICE
31: CONTROL UNIT
32: COMMUNICATION UNIT
4: INFRASTRUCTURE FACILITY
41: CONTROL UNIT
42: COMMUNICATION UNIT
43: SENSOR
5: VEHICLE
51: CONTROL UNIT
52: COMMUNICATION UNIT
53: CHARGING PORT
N: NETWORK
SP1: CHARGING SPACE
SP2: STANDBY SPACE

## Claims

1. A charging system comprising:
a charger (1) including a charging connector (13);
an arm mechanism (2) that is capable of gripping the charging connector (13) and moves the charging connector (13) within a predetermined range; and
a control device (3) that controls the charger (1), the arm mechanism (2), and a plurality of vehicles (5),
wherein a portion of the charging connector (13) gripped by the arm mechanism (2) is arranged toward a side of the arm mechanism (2).

2. The charging system according to claim 1, wherein
an arm-side bracket (241) openable and closable and provided with a tapered pin (242) on an inner side is attached to a distal end of the arm mechanism (2),
a connector-side bracket (131) provided with a tapered hole (132) on an outer side is attached to a proximal end of the charging connector (13), and
the arm mechanism (2) grips the connector-side bracket (131) by the arm-side bracket (241) and grips the charging connector (13) by inserting the tapered pin (242) into the tapered hole (132).

3. The charging system according to claim 1, wherein the control device (3) causes the vehicle (5) to be parked such that a charging port (53) of the vehicle (5) faces a side of the charger (1) within the predetermined range.

4. The charging system according to claim 1, wherein a length of a width of a mount (6) on which the charger (1) and the arm mechanism (2) are mounted is equal to a length of a width of the charger (1).
